# EUROPEAN PATENT APPLICATION

(11) **EP 0 556 963 A1**
(43) Date of publication of application: **25.08.1993**
(21) Application number: 93300628.0
(22) Date of filing: 28.01.1993
(51) Int. Cl.: C05F 17/02, B29D 22/00, B29C 41/04

(54) **Composting device**

(30) Priority: 19.02.1992 GB 9203487
(71) Applicant: EGBERT H TAYLOR & COMPANY LIMITED, Hartlebury, Worcestershire DY10 4JB (GB)
(72) Inventor: Stanwell-Smith, Colin, Cardigan SA43 3BL (GB)
(74) Representative: Bridge-Butler, Alan James

(57) **Abstract**

A composting container comprises a frusto-conical hollow body (10) whose wall has spaced radially outwardly protruding wall portions (1) parallel to one another and to a first end of the body which, in use, will be in contact with the ground. At or near said end of the body is at least one aperture (11) covered by a movable, annular, frusto-conical cover (3). The body wall also has circumferentially spaced, axially extending, radially outwardly protruding ribs (2) which are divided into separate axially aligned portions by said protruding wall portions. There is a lid (13) for closing its second (open) end through which compostable material will be loaded. Access to the aperture(s) (11) and compost may be obtained (a) by lifting the cover (3), or (b) by sliding the cover (3) about the vertical axis of the body (10) to bring an aperture (20) in the cover (3) into register with the aperture in the body.

## Description

This invention relates to a composting device.

A disadvantage of some of the composting containers which are on the market is that they necessitate dismantling or removal of the container on order to gain access to the compost, and it is an object of the present invention to overcome this disadvantage.

According to a first aspect, therefore, the present invention consists in a composting container having a hollow body which is open at both ends and which is provided with at least one aperture in the vicinity of or at that end thereof which is intended, in use of the container, to be in contact with the ground, and a cover which normally covers the or each aperture and which is movable in order to permit access to and removal of mature compost by way of said temporarily uncovered aperture(s).

In a generally preferred embodiment of the container described in the preceding paragraph, said hollow body tapers, that end which is intended, in use of the container, to be in contact with the ground being of the larger dimension.

In a container as described in either of the two preceding paragraphs, said hollow body may be frusto-conical and said cover may be of complementary frusto-conical form.

The container described in any one of the three preceding paragraphs may be provided with a number of protruding wall portions of the hollow body, each portion being hollow and being disposed parallel to that end of the body which is intended, in use of the container, to be in contact with the ground and all of the portions being spaced apart from one another along the length of the hollow body.

The container described in any one of the four preceding paragraphs may be provided with a number of axially extending and protruding ribs, each of said ribs being formed in the hollow body and being hollow. In the case where the container is provided both with said hollow protruding ribs and with the spaced hollow protruding wall portions of the preceding paragraph, said wall portions divide each hollow protruding rib into separate axially aligned parts.

The container described in any one of the five preceding paragraphs will preferably be provided with a lid to close that end of the hollow body which, in use of the container, is remote from the ground.

Another object of the present invention is to provide an economical method of manufacturing composting containers according to said first aspect.

According to a second aspect, therefore, the present invention consists in a method of manufacturing a composting container as described in the seventh preceding paragraph, said method comprising the following steps, namely,
(a) moulding a quantity of a plastics material in order to form an elongate hollow member whose opposite ends are closed;
(b) cutting the hollow member transversely of its longitudinal axis at three spaced locations in order to create two hollow bodies and two covers;
(c) applying the covers to the respective hollow members in order to cover the apertures created therein; and
(d) cutting the hollow members at or in the vicinities of their closed ends in order simultaneously to open said ends and to create lids which are usable to cover said open ends.

The moulding mentioned in the preceding paragraph will preferably be rotational moulding although, of course, injection moulding would be perfectly feasible even if more expensive.

The present invention further consists in a composting container (and a method of manufacturing said container) substantially as hereinafter described with reference to the accompanying diagrammatic drawings, in which:-
Figure 1 illustrates a composting container in longitudinal section and also with a movable cover and a movable lid in their respective positions;
Figure 2 is a view similar to that in Figure 1 but with the movable cover and the movable lid both lifted off;
Figure 3 shows the product of the moulding step before any cutting is done; and

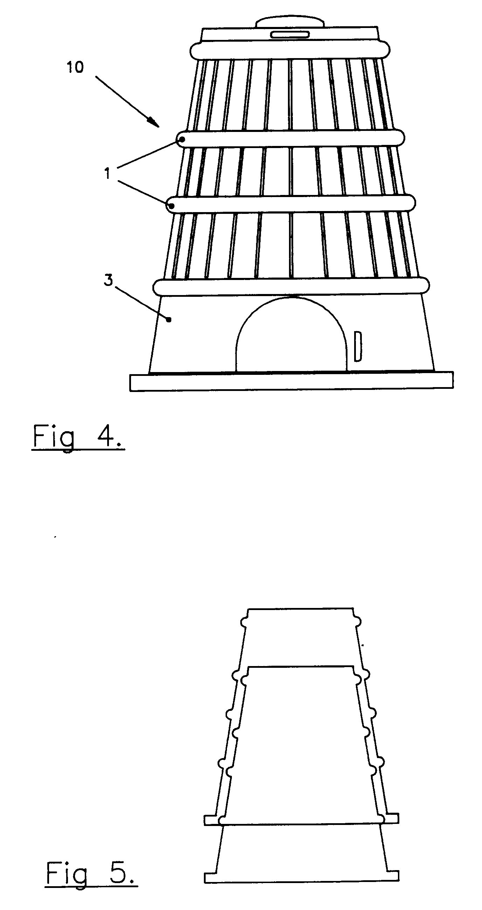

Figures 4 and 5 show the assembled composting container and the nesting capability, respectively.

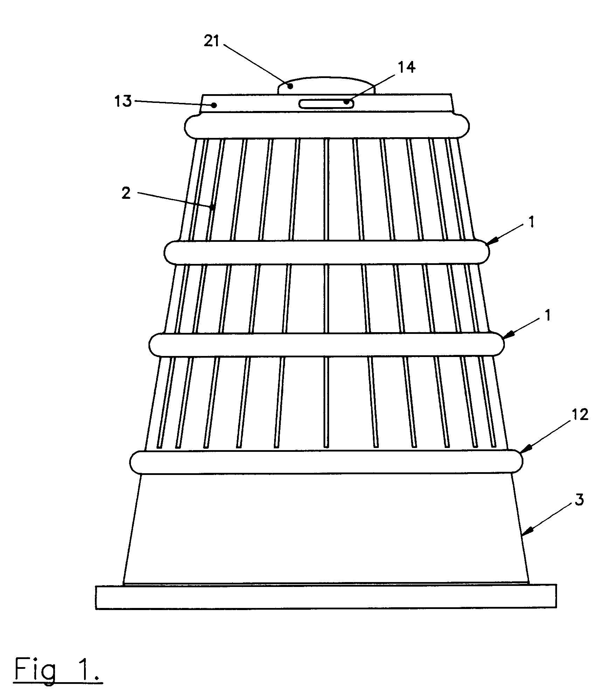

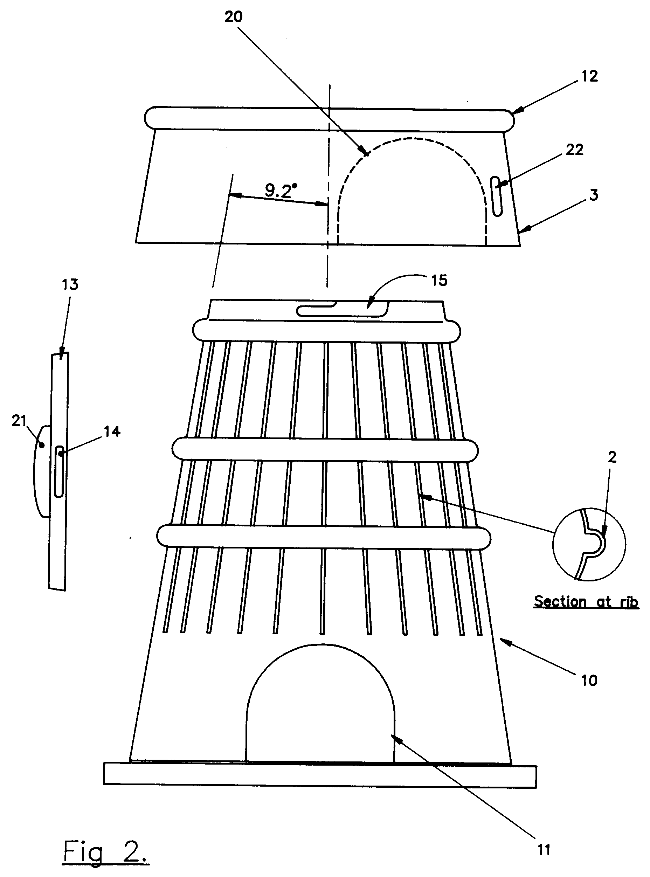

Referring briefly to Figures 1 and 2, there is illustrated a generally preferred embodiment of a composting container according to the present invention, namely, one whose shape and configuration approximates to that of a frustum of a hollow right circular cone. Said composting container has a hollow body indicated by the reference numeral 10 in Figure 2, said body being open at both ends and that end which is of larger diameter being intended, in use of the container, to sit on the ground. Near said end of larger diameter, there is at least one aperture 11 which is for the purpose of facilitating the extraction of mature compost.

The hollow body 10 is provided with a number of protruding wall portions 1 which are hollow and which are disposed parallel to that end of the body which is of the larger diameter, said radially outwardly protruding wall portions 1 being spaced from one another along the length of the body.

Said body 10 is also provided with a number of radially outwardly protruding ribs 2 (see particularly Figure 2) which extend in an axial direction and which are hollow and which are spaced from one another circumferentially of the body 10. It will be seen that the provision of the protruding wall portions 1 leads to the subdivision of each of the ribs 2 into a number of separated but axially aligned parts.

A cover 3, shown detached in Figure 2 and in aperture-covering position in Figure 1, has one end (namely, the one of smaller diameter) so formed at 12 that, when the cover 3 is in the Figure 1 position thereof, the assembly appears to exhibit four spaced portions 1 although the body 10 is in fact only moulded with three of them. The cover 3, when applied, can be lifted up very easily to reveal the aperture(s) 11. On the other hand, the cover 3 could be provided with at least one aperture (indicated at 20, Figure 2) in order to permit angular movement of the cover about the longitudinal axis of the container to bring its aperture(s) into register with the aperture(s) 11.

A lid 13 (best seen in Figure 2) has a protuberance 14 which extends radially inwardly of the skirt of the lid. Said protuberance 14 is intended to enter a shaped recess 15 formed in the top of the body and, upon a small angular rotation of the lid being made, to provide a kind of bayonet fixing of the lid to the body 10. It would be preferable to provide two diametrically opposed protuberances 14 on the lid and two diametrically opposed recesses 15 in the top of the body 10.

The wall portions 1 not only provide the user with convenient grips for lifting the body 10 but also provide chambers (inside the composting container) containing air which is essential for composting. Air is similarly available in the hollow ribs 2.

The frusto-conical shape and design of the cover 3 for the apertures 11 means that it is quick and easy to use, forms a good enough seal without extra parts, and can be moulded in one piece with the body 10 and separated therefrom by simply cutting along lines after moulding.

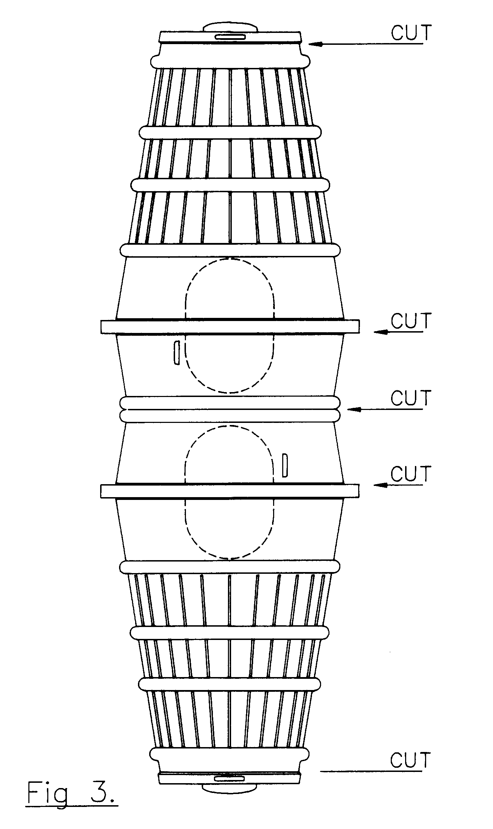

Referring briefly to Figure 3, the preferred method of manufacture is by rotational moulding and the product taken from the mould will look as ilustrated; it will be a completely closed elongate hollow member. This will then be cut, at the locations indicated, in order to provide two lids 13, two bodies 10 and two covers 3. The aperture(s) 11 will be made by cutting along an obvious moulded line, which line is shown as dotted in Figure 3. If rotational moulding led to limited output and if injection moulding were to be employed instead of rotational moulding, the aperture(s) 11 could be moulded instead of having to be made with a cutting instrument but the cost of tooling would be far higher for injection moulding than it is for rotational moulding.

The composting container will preferably be made from polythene which is an ideal material being chemically inert and resistant to attack, tough even at freezing temperatures and is itself suitable for recycling. The colour can be chosen at will and it is planned to optimise solar gain by choice of suitable transparency and colour. Solar heat is helpful in accelerating composting and in killing weed seeds.

The spade holes 11 might also be used as holes through which to poke and stir the compost in order to improve aeration.

With many known composting devices, it is necessary to dismantle them to take the compost; in such a case, it is necessary either to separate the recently added material from the older malerial or to stop using the composter for several weeks before emptying it. With the composting container described in this Application, the matured compost can be removed through the spade holes 11 without dismantling the whole thing; this is an advantage because the fresh material at the top is not mixed with mature compost, thus ensuring constant use.

The frusto-conical shape of the composting container allows the body 10 to be rotated around the compost inside in order to move the spade holes 11 into a new position. This, in practice, would require very slight lifting in order to separate the inner surface of the body 10 from the compost, followed by turning the body through an angle great enough to achieve the desired purpose. Hence the importance of the frusto-conical shape. Some existing or known composters are square or rectangular and are consequently relatively difficult to clean out by way of spade holes, even if such spade holes are provided; in the case of one known composter, the entire front wall has to be detached in order to reach the composted material but the disadvantage of such an arrangement is, it is believed, that removal of mature compost from the bottom of the heap will inevitably disturb the material which is on top and which is not degraded, possibly leading to the partial collapse of the heap and making unnecessary work. This difficulty is avoided by the use of the frusto-conical composting container according to the present invention. The hollow protruding wall portions 1 provide good hand grips to enable the user of the container according to the invention to rotate the container to the required extent in order to reach mature compost from another part of the container.

It is considered that it will be advantageous to provide a hollow moulded handle 21 on the lid 13 for an obvious reason, and also to provide the cover 3 with at least one (preferably two) hollow moulded, radially outwardly projecting protuberance(s) 22 adjacent the aperture 20 or in any other suitable position. Such protuberance(s) 22 will enable the user of the composting container to move the cover 3, with one foot, angularly about the vertical longitudinal axis of the container.

The ribs 2 are not open anywhere along their lengths (or subdivided lengths). It has been found that the amount of air in the ribs2 and in the wall portions 1 appears to be ample in promoting and/or assisting the biodegradation of the vegetable matter placed in the composting container. Moreover, the whole of the hollow body is imperforate except, of course, for the aperture or apertures 11.

The angle between the vertical longitudinal axis of the composting container and the frusto-conical wall thereof is, in one generally preferred embodiment, 9.2°.

The frusto-conical shape of the completed composting container permits the stacking, in a store therefor, of two or more containers nested one within another as illustrated. This capability saves valuable storage space in, for example, a garden centre or other vending establishment.

## Claims

1. A composting container (10) having a hollow body which is open at both ends and which is provided with at least one aperture (11) in the vicinity of or at that end thereof which is intended, in use of the container (10), to be in contact with the ground, and a cover (3) which normally covers the or each aperture (11) and which is movable in order to permit access to and removal of mature compost by way of said temporarily uncovered aperture(s).

2. A composting container as claimed in Claim 1, wherein said hollow body tapers, that end which is intended, in use of the container (10), to be in contact with the ground being of the larger dimension.

3. A composting container as claimed in Claim 1 or Claim 2, wherein said hollow body is frusto-conical and said cover (3) is of complementary frusto-conical form.

4. A composting container as claimed in any one of Claims 1 to 3, wherein said hollow body of the container (10) is provided with a number of protruding wall portions (1), each portion (1) being hollow and being disposed parallel to that end of the body which is intended, in use of the container (10), to be in contact with the ground and all of the portions (1) being spaced apart from one another along the length of the hollow body.

5. A composting container as claimed in any one of Claims 1 to 3, wherein said hollow body of the container (10) is provided with a number of axially extending and protruding ribs (2), each of said ribs (2) being formed in the hollow body and being hollow.

6. A composting container as claimed in Claim 4, wherein said hollow body of the container (10) is provided with a number of axially extending and protuding ribs (2), each of said ribs (2) being formed in the hollow body and being hollow, the spaced hollow protruding wall portions (1) dividing each hollow protruding rib (2) into separate axially aligned parts.

7. A composting container as claimed in any one of Claims 1 to 6, wherein the container (10) is provided with a lid (13) to close that end of the hollow body which, in use of the container (10), is remote from the ground.

8. A composting container as claimed in any one of the preceding Claims, wherein said cover is provided with an aperture (20) which, by angular movement of the cover about the vertical axis of the hollow body, can be brought into register with the aperture (11).

9. A composting container as claimed in Claim 8, wherein there is at least one protuberance (22) on the cover for the purpose of facilitating the movement of the cover (3) about said axis by means of a foot or implement.

10. A method of manufacturing a composting container as claimed in Claim 1, said method comprising the following steps, namely,
(a) moulding a quantity of a plastics material in order to form an elongate hollow member whose opposite ends are closed;
(b) cutting the hollow member transversely of its longitudinal axis at three spaced locations in order to create two hollow bodies and two covers;
(c) applying the covers to the respective hollow bodies in order to cover apertures created therein; and
(d) cutting the hollow members at or in the vicinities of their closed ends in order simultaneously to open said ends and to create lids which are usable to cover said open ends.

11. A method as claimed in Claim 8, wherein the moulding is achieved by rotational moulding.

12. A method as claimed in Claim 8, wherein the moulding is achieved by injection moulding.
